# EUROPEAN PATENT APPLICATION

(11) **EP 4 067 459 A1**
(43) Date of publication of application: **05.10.2022**
(21) Application number: 21166831.4
(22) Date of filing: 02.04.2021
(51) Int. Cl.: C10C 3/00, C04B 35/52, C04B 35/532, C25C 3/12

(54) **IMPROVED PITCH PRODUCT, PROCESS FOR ITS PREPARATION AND USE**

(71) Applicant: Rain Carbon bvba, 9060 Zelzate (BE); Rain Carbon Germany GmbH, 44579 Castrop-Rauxel (DE)
(72) Inventor: CLAES, Joris, 9130 Verrebroek (BE); KUHNT, Christopher, 58452 Witten (DE); VAN DE VYVERE, Vincent, 9051 Sint-Denijs-Westrem (BE); DENOO, Bram, 8310 Assenbroek (BE); SPAHR, Michael, 6500 Bellinzona (CH)
(74) Representative: BiiP cvba

(57) **Abstract**

The present invention is directed to a pitch product comprising petroleum-derived distillation residue and a coal tar-derived distillation residue, said pitch product characterized by a concentration of at least 80% asphaltenes (SARA). Further, the present invention is directed to a pitch binder comprising said pitch product in particular for use in manufacturing of graphite electrodes for electric arc furnaces, and carbon anodes and Soederberg paste for aluminum production. The present invention is further directed also to a graphite electrode comprising said pitch binder, as well as to a carbon anode comprising said pitch binder. The present invention provides also a process for producing a pitch product comprising a petroleum-derived distillation residue and a coal tar-derived distillation residue, said process comprising a petroleum vacuum distillation process step for obtaining said petroleum-derived distillation residue, and a process for manufacturing a graphite electrode or a carbon anode comprising said process for producing a pitch product.

## Description

### TECHNICAL FIELD

The present invention generally relates to a pitch product comprising a petroleum-derived distillation residue and a coal tar-derived distillation residue, more specifically a pitch product for use in the manufacturing of graphite electrodes for electric arc furnaces and carbon anodes for aluminum production.

In addition, the present invention relates to a process for producing such pitch product.

### BACKGROUND

Graphite electrodes for steel manufacturing and prebaked carbon anodes for the aluminum industry are produced by hot-mixing calcined coke and a hydrocarbon carbon precursor and forming the mixture into the green electrode shapes that are carbonized in a subsequent baking process. The hydrocarbon binder material provides enough mechanic strength to the unbaked (green) electrode shape and converts to carbon during the baking process. The resulting carbon semi-graphitized electrodes meet the requirements as anode in the electrolysis cell used in the production of aluminum. Electrodes used in the electric arc furnaces for steel production are further impregnated with a hydrocarbon impregnation pitch, carbonized and subsequently graphitized. For application as electrodes in Soederberg cells a paste is produced by hot mixing of the dry aggregate (calcined coke, anthracite, graphite etc.) and hydrocarbon binder, formed as a briquets or other preformed shapes and transferred into the Soederberg cell where it is subsequently carbonized in the electrolysis cell itself.

Traditionally, the hydrocarbon pitch binder material in the manufacturing of these graphite electrodes for electric arc furnaces and carbon anodes for aluminum production (including prebaked anodes and Soederberg anodes), is coal tar pitch, because it meets the mechanical requirements in the green stage and is converted into electrically conductive carbon during the carbonization process at very high coke yield, thereby avoiding a high porosity in the resulting article due to fewer volatiles formed during the carbonization process. Also, the hydrocarbon impregnation pitch used for impregnation of graphite electrodes is typically based on coal tar distillation products.

As by-product of the production of metallurgical coke used in the steel production, coal tar has always been sufficiently available. Recently however, due to the lower demand for virgin iron, less metallurgical coke is produced and hence less coal tar is available.

Another drawback of coal tar pitch binder is the rather high amount of (ca. 10 000 ppm in the typical viscosity range) of benzo(a)pyrene, which is classified as carcinogenic. On top of the B(a)P content other polyaromatic hydrocarbons are considered relevant as hazardous to health and environment.

In an attempt to produce an alternative pitch from petroleum sources which contain less benzo[a]pyrene than coal tar, petroleum-derived pitch has been considered.

However, petroleum-derived pitch does not attain the same quality parameters as coal tar pitch if used as a pure binder material in the electrode production process. A first drawback is that it has a lower coke yield than coal tar pitch, and secondly, it does not have any primary quinoline insoluble constituents. These primary quinoline insoluble constituents are considered as beneficial to the anode quality in aluminum production and are contained in conventional coal tar-based pitch.

A further drawback of known petroleum-derived pitch materials is typically the softening points below 100°C being too low for use in hydrocarbon pitch binder material in the manufacturing of graphite electrodes in which the softening points target is 110-130°C. These low softening points also limit the use of petroleum pitches in blends with coal tar pitch (e.g. US 5,746,906).

In addition, typical low flashpoints below 200°C of existing petroleum-based pitches give rise to safety concerns in the electrode fabrication process that can contain hot mixing processes at temperatures up to 200°C.

In summary, none of the attempts to produce suitable petroleum pitch on an industrial scale have provided an alternative for coal tar pitch binder able to reliably serve the aluminum industry with high product volumes.

More specifically, neither pure petroleum-derived pitch, neither blends of petroleum pitch with coal tar pitch with substantially amount of petroleum pitch above 10 %, have so far not been able to meet the necessary requirements for use as hydrocarbon pitch binder material in the manufacturing of carbon and graphite electrodes.

Given the above, it is a general objective of the present invention to provide an alternative for coal tar pitch binder that allows an increased security of supply and meets the necessary requirements for use as hydrocarbon pitch binder material in the manufacturing of carbon and graphite electrodes.

Another objective of the present invention is to provide an alternative pitch binder resulting in similar coke values, and similar processing and performance of graphite electrodes, prebaked anodes and pastes used in Soederberg technology.

A further objective of the present invention is to provide an alternative for coal tar pitch binder that is more environmentally friendly.

### SUMMARY

In a first aspect in accordance with the present invention, a pitch product is provided comprising petroleum-derived distillation residue and a coal tar-derived distillation residue, said pitch product characterized by a concentration of at least 80% asphaltenes (SARA).

In a second aspect of the present invention, a pitch binder comprising the pitch product as described throughout this text is provided, said pitch binder for use in the manufacturing of any type of carbon-based formed shapes and in particular for use in manufacturing of graphite electrodes for electric arc furnaces, and carbon anodes and Soederberg paste for aluminum production.

In a third aspect in accordance with the present invention, a graphite electrode is provided comprising said pitch binder.

In a fourth aspect in accordance with the present invention, a carbon anode is provided comprising said pitch binder.

In a fifth aspect in accordance with the present invention, a process for producing a pitch product is provided, said pitch product comprising a petroleum-derived distillation residue and a coal tar-derived distillation residue, said process comprising a petroleum vacuum distillation process step for obtaining said petroleum-derived distillation residue.

In a sixth aspect according to the present invention, a process for manufacturing a graphite electrode or a carbon anode is provided comprising said process for producing a pitch product.

### DETAILED DESCRIPTION

The pitch product as described throughout this text is provided as an alternative for coal tar pitch binder, meeting the requirements of the aluminum industry and/or graphite industry and having the advantages of low benzo(a)pyrene content and ample availability.

In a first aspect in accordance with the present invention, a pitch product is provided comprising petroleum-derived distillation residue and a coal tar-derived distillation residue, said pitch product characterized by a concentration of at least 80% asphaltenes (SARA).

The inventors surprisingly found that a pitch product comprising petroleum-derived distillation residue and a coal tar-derived distillation residue, and containing an amount of asphaltenes at a similar level compared to the known coal tar pitch binders as measured by the SARA method (Clay-Gel Absorption Chromatographic Method according to ASTM D2007) shows a coke value of at least 45% ALCAN at the target softening point (e.g. 110-150°C Mettler). A concentration of at least 80 % asphaltenes or at least 84 % or at least 86 % may result in respectively increasing coke values. The pitch product ensures a sufficient mechanical strength of the resulting green coke shapes, and low shrinkage during carbonization. The resulting carbonized shapes of bound coke show low porosity and air permeability and in addition a sufficient electrical conductivity.

In an embodiment in accordance with the present invention, the pitch product may have a thixotropic behavior with high viscosity recovery after 60 seconds of at least 20% (DIN91143-2), or at least 40%, or at least 60%, or up to 90%. Such thixotropic behavior indicates good processing and impregnation characteristics. Without being bound by any theory, the surprising high recovery rate could be due to a lower amount of solid constituents that disturb the intermolecular arrangement and interactions between the larger molecules and therefore the re-setting of the pitch structure after the shear force impact.

A high thixotropy of a liquid binder pitch is important because an important requirement for a pitch binder for electrode fabrication is the ability to process and to wet and impregnate the compressed electrodes formed from coke in the electrode fabrication process. The molten liquid pitch is pumped and mixed with the coke and by that high shear forces are applied. Usually, this pumping and mixing of the pitch requires low viscosity of the liquid pitch. In contrast, the impregnation and pore filling of the compressed electrodes requires higher pitch viscosity to retain the binder pitch in the pores. The viscosity at high shear rate should be low whereas the viscosity at low shear rates should be high. In addition, a high built-up or recovery rate of the viscosity after applying and releasing of the shear energy is advantageous in the application.

More specifically, the pitch product of the present invention may have a concentration of at least 84% asphaltenes (SARA) and a high viscosity recovery after 60 seconds of at least 25%.

In an embodiment in accordance with the present invention, the pitch product may have a resin content below 10% (SARA), which may contribute to its high coke yield.

In another embodiment in accordance with the present invention, the pitch product may have a B(a)P content of less than 8500 ppm , or less than 7000, or less than 5000, or even less than 3000 ppm, and/or a 16 EPA-PAH Sum (Polycyclic Aromatic Hydrocarbons according to US Environmental Protection Agency (EPA)) of less than 7% (m/m), or even less than 5%. A sufficiently low B(a)P content and/or 16 EPA-PAH Sum results obviously in an improved environmental friendliness compared to pure coal tar derived pitch products. A low B(a)P containing pitch binder product can also be utilized with advantage in the manufacturing of electrodes for aluminum (prebaked anodes and Soederberg anodes) and electric arc furnaces.

In a further embodiment, the pitch product may have a coke yield of at least 45% Alcan, or at least 50% Alcan, or at least 55% Alcan at softening points between 110-150°C Mettler. As the pitch product is converted into carbon during the carbonization process, a sufficiently high coke yield allows avoiding a high porosity in the resulting shape due to fewer volatiles formed during the carbonization process. At the same time a high coke yield avoids a high shrinkage during baking of the green anode that would result in the risk of cracks as well as shapes being outside of the acceptable tolerances of the dimensions. Further, as the pitch product is in fact a carbon precursor, sufficiently high coke yield is critical to reach porosity targets of the baked anode/electrode.

In a further embodiment, the pitch product may have a flashpoint between 200 and 270°C, preferably between 220 and 245°C, allowing to process the pitch product according to safety requirements as may be required in hot mixing processes.

In an embodiment of the present invention, the pitch product may have a softening point between 110 and 150°C Mettler, being the target range in manufacturing electrodes used in the steel and aluminum production as well as Soederberg pastes used for aluminum production.

In accordance with the present invention, the pitch product may be a blend of petroleum-derived distillation residue and coal tar-derived distillation residue. In an embodiment, said blend may have a mixing ratio between 20:80 and 70:30, preferably between 30:70 and 60:40, and even more preferably between 40:60 and 60:40. Such mixing ratio may result in softening points between 110 and 140°C Mettler, a quinoline insoluble range of 2-12 %, preferably of 2-8 %, a beta-resin content of 13-25 % and a coke yield (value) measured with the Alcan method of at least 45 %.

In a particular embodiment of the present invention, the pitch product may have a coke yield of at least 45 % Alcan, a softening point between 110 and 140 °C Mettler, a quinoline insolubles range of 2-12%, and a beta-resin content of 13-25%. More preferably, the quinoline insolubles are in the range of 2-8 %.

In an embodiment, the pitch product being a blend of petroleum-derived distillation residue and coal tar-derived pitch, can be optimized in respect to blending ratio to have a gain in coking value (Alcan) that is at least 0,5 wt.% above the respective calculated weighted mean coking values of the petroleum-derived distillation residue and coal tar-derived distillation residue.

In another embodiment, a pitch product according to the present invention may comprise constituents of raw materials produced by the pyrolysis of petroleum streams, said raw materials including at least 30 wt.% asphaltenes, less than 10 % saturates, and less than 40 % resins, as described with (SARA). Raw materials with such composition allow a high yield of the said product.

In a second aspect of the present invention, a pitch binder comprising the pitch product as described throughout this text is provided, said pitch binder for use in the manufacturing of any type of carbon-based formed articles, such as for example forms, bricks, shapes, filter grids for electrode and refractory applications, and in particular for use in manufacturing of graphite electrodes for electric arc furnaces, and carbon anodes and Soederberg paste for aluminum production. The pitch binder as described throughout this text can also be used as hydrocarbon impregnation pitch.

In third aspect in accordance with the present invention, a graphite electrode is provided comprising said pitch binder. Further, the pitch binder may also be used in graphite electrode manufacturing as impregnation pitch. Such pitch binder and impregnation pitch may support the integrity of the carbon body by pore filling of the carbonized electrodes.

In a fourth aspect in accordance with the present invention, a carbon anode is provided comprising said pitch binder.

In a fifth aspect in accordance with the present invention, a process for producing a pitch product is provided, said pitch product comprising a petroleum-derived distillation residue and a coal tar-derived distillation residue, said process comprising a petroleum vacuum distillation process step for obtaining said petroleum-derived distillation residue.

In a further embodiment in accordance with the present invention, a process for producing the pitch product as described throughout this text is provided, comprising a petroleum vacuum distillation process step and a separate coal tar vacuum distillation process step for obtaining respectively a petroleum-derived distillation residue and coal tar-derived distillation residue, and blending the respective residues. The respective distillation residues are produced by separate vacuum distillation of coal tar and petroleum-derived feedstock and subsequently mixed in tailored compositions.

A benefit of a process in accordance with the present invention is that it may allow keeping the amount of asphaltenes measured by SARA at a similar level compared to the known coal tar pitch binders. In addition, other pitch properties may not be degraded compared to known coal tar pitch binders.

An additional benefit is that such process may result in that the coke value of the pitch product can be kept at a high level (e.g. at least 40 % ALCAN) at the target softening point (e.g. 110-150°C Mettler).

An additional benefit of a process in accordance with the present invention is the high thixotropic behavior and a high viscosity recovery after 60 seconds of at least 25% of the resulting product.

In additional benefit of a process in accordance with the present invention is that raw materials comprising constituents of raw materials produced by the pyrolysis of petroleum streams, said constituents having a composition with an amount of at least 30 wt.% asphaltenes, less than 10% saturates, and less than 40% resins in the raw materials, as described with (SARA) allow high yield of the said product.

In contrast to producing a pitch product with a process in accordance with the present invention, conventional coal tar pitch binder extended with petroleum-based pitches are produced by distillation at ambient pressure and higher temperatures, in some cases followed by air blowing, and either by mixing the coal tar and petroleum-based raw material before distillation or blending the components after distilling the single components first. Drawbacks of these products resulting from ambient pressure distillation are a high mesophase and toluene insoluble content due to the high processing temperatures leading to cracking and mesophase formation. Other drawbacks are the low coke yields, high volatile content, and high viscosities that deteriorate the impregnation and binder properties and processing of the pitch as well as low flash points giving rise to safety issues in the electrode fabrication processes.

Additional drawbacks of distillation at ambient pressure is that, as the distillation of petroleum tars is reactive, the temperatures being necessary for distillation at atmospheric pressure already initiate the conversion to solid carbon components in the heating chamber and columns, potentially leading to an excessive fouling rate during pitch production resulting in reliability issues of the plant.

In an embodiment of the present invention, the distillation process steps are performed at vacuum levels between 10 and 400mbar, preferably 50 and 250 mbar, and at temperatures between 200 and 400°C, preferably between 280 and 370 °C.

A process in accordance with the present invention allows a strict control and prevention of potential mesophase formation for low secondary quinoline insoluble amounts in the pitch.

Further, separate distillation of coal tars and petroleum tars may result in more optimized product characteristics of the separate distillation residues, yielding in higher quality pitch product.

In addition, a process in accordance with the present invention gives a high level of reliability by reaching the required softening point and viscosity of the binder at lower temperatures compared to conventional ambient pressure distillation and hence leads to better plant reliability. The lower distillation temperatures used in the vacuum distillation process avoid degradation reactions like mesophase and coke formation, leading to fouling of the plant and regular shutdowns.

Further, the process of the present invention may result in a pitch product with high quality and reliability showing sufficiently high coking value and low 16 EPA PAH content at low viscosity for use in manufacturing electrodes used in the steel and aluminum production as well as Soederberg pastes used for aluminum production. 16 EPA PAH level of the resulting binder is lower than of the pure coal tar-derived products giving rise to more environmentally friendly materials.

The petroleum-derived distillation residue and coal tar-derived distillation residue may be blended in a mixing ratio between 20:80 and 70:30. This may result in an alternative for coal tar pitch binder with similar or lower toluene insolubles, similar or lower beta-resin content and similar or lower secondary quinoline insolubles content (mesophase formation) combined with an optimal viscosity which positively impacts the binding performance of the pitch product.

The process in accordance with the present invention, and more specifically the mixing ratio may result in softening points between 110 and 140°C Mettler, a quinoline insoluble range of 2-12 %, preferably of 2-8 %, a beta-resin content of 13-25 % and a coke yield (value) measured with the Alcan method of at least 45 %.

In addition, the process in accordance with the present invention, and more specifically the mixing ratio, may result in that the blend may have a coking value (Alcan) being at least 0,5 wt.% above the respective calculated weighted mean coking values of the petroleum-derived distillation residue and coal tar-derived distillation residue.

In a sixth aspect according to the present invention, a process for manufacturing a graphite electrode or a carbon anode is provided comprising the process for producing a pitch product as described throughout this text.

Below table illustrates a pitch product formulation in accordance with an embodiment of the present invention:

| **Analysis Method** | **Value Range** | **Unit** |
|---|---|---|
| Amount of petroleum-derived pitch in coal tar pitch | 20-70 | % (by weight) |
| Softening point, Mettler | 110-140 | °C |
| Quinoline insoluble, Ql | 2-8 | % (by weight) |
| Toluene insoluble, TI | 15-26 | % (by weight) |
| Beta-resins | 13-25 | % (by weight) |
| Coke yield (value) | 45-60 | % (by weight) |
| Ash (900 °C) | <0,3 | % (by weight) |
| C/H ratio | >1,6 | % (by weight) |
| Benzo[a]pyrene content | <8500 | ppm |
| 16 EPA-PAH sum | <7 | % (by weight) |
| Flash point (small scale equilibrium) | 200-270 | 0C |
| Dynamic viscosity | | |
| -at 160 °C | 1000-5000 | mPa·s |
| -at 185 °C | 350-1000 | mPa·s |
| -at 200 °C | 100-400 | mPa·s |
| Viscosity recovery after 60 seconds (180 °C) | 25-90 | % |
| SARA (final product) | | |
| -asphaltenes | >84 | % (by weight) |
| -resins | <10 | % (by weight) |
| SARA (starting material) | | |
| -asphaltenes | >30 | % (by weight) |

Below table represents 3 specific examples of a pitch product in accordance with the present invention:

| Analysis Method | Unit | EXAMPLE 1 | EXAMPLE 2 | EXAMPLE 3 |
|---|---|---|---|---|
| Amount of petroleum-derived pitch in coal tar pitch | %(m/m) | 25 | 50 | 50 |
| Softening point, Mettler | ⁰C | 118.5 | 118 | 115.1 |
| Quinoline insoluble, QI | %(m/m) | 5.5 | 4.5 | 3 |
| Toluene insoluble, TI | %(m/m) | 24 | 17.7 | 16.2 |
| Beta-resins | %(m/m) | 18.4 | 13.2 | 13.2 |
| Coke yield (value) | %(m/m) | 58.2 | 50 | 54 |
| Benzo[a]pyrene content | ppm | 7790 | 5765 | 5800 |
| 16 EPA-PAH sum | %(m/m) | 6.5 | 6 | 4.8 |
| Flash point (small scale equilibrium) | ⁰C | 247 | 230 | 260 |
| Viscosity recovery after 60 seconds (180 °C) | % | 36 | 79 | 89 |
| SARA (final pitch product) | | | | |
| Asphaltenes | %(m/m) | 92.605 | 87.77 | 91.07 |
| Resins | %(m/m) | 4.4175 | 7.195 | 5.845 |

Below table provides an overview of analytical procedures of the product parameters as used in this text:

| **Analysis** | **Unit** | **Norm/Method** |
|---|---|---|
| Softening point, Mettler | ⁰C | ASTM D3104 |
| Quinoline insoluble, QI | % (by weight) | DIN 51921 |
| Toluene insoluble, TI | % (by weight) | DIN 51906 |
| Beta-resins | % (by weight) | Calculation TI-QI |
| Coke yield (value), Alcan | % (by weight) | ASTM D4715 |
| Ash (900 °C) | % (by weight) | ASTM D2415 |
| Benzo[a]pyrene content | ppm | ISO 18287 |
| 16 EPA-PAH sum | % (by weight) | ISO 18287 |
| Flash point (small scale equilibrium) | °C | ISO 3679 |
| Dynamic viscosity | | ASTM D5018 |
| -at 160 °C | mPa·s | |
| -at 180 °C | mPa·s | |
| -at 200 °C | mPa·s | |
| Viscosity recovery after 60 seconds (180 °C) | % | Internal method according to DIN91143-2 |
| SARA (final product) | | ASTM D2007 |
| -asphaltenes | % (by weight) | |
| -resins | % (by weight) | |
| SARA (starting material) | | ASTM D2007 |
| -asphaltenes | % (by weight) | |

## Claims

1. A pitch product comprising a petroleum-derived distillation residue and a coal tar-derived distillation residue, said pitch product further **characterized by** a concentration of at least 80% asphaltenes (SARA).

2. A pitch product according to claim 1, having a thixotropic behavior with high viscosity recovery after 60 seconds of at least 20% (DIN91143-2).

3. A pitch product according to claims 1 or 2, having a concentration of at least 84% asphaltenes (SARA) and a high viscosity recovery after 60 seconds of at least 25%.

4. A pitch product according to any of claims 1 to 3, having a resin content below 10% (SARA).

5. A pitch product according to any of claims 1 to 4, having a B(a)P content of less than 8500 ppm and/or a 16 EPA-PAH Sum of less than 7% (m/m).

6. A pitch product according to any of the above claims, having a coke yield of at least 45% Alcan.

7. A pitch product according to any of the above claims, having a flashpoint between 200 and 270°C.

8. A pitch product according to claim 7, having a flashpoint between 220 and 245°C.

9. A pitch product according to any of the above claims, having a softening point between 110 and 150°C Mettler.

10. A pitch product according to any of the above claims, being a blend of petroleum-derived distillation residue and coal tar-derived distillation residue.

11. A pitch product according to any of the above claims, having a coke yield of at least 45 % Alcan, a softening point between 110 and 140 °C Mettler, a quinoline insoluble range of 2-12%, and a beta-resin content of 13-25%.

12. A pitch product according to claims 10 or 11, being a blend of petroleum-derived distillation residue and coal tar-derived distillation residue in a mixing ratio between 20:80 and 70:30.

13. A pitch product according to claim 12, having a coking value (Alcan) being at least 0,5 wt.% above the respective calculated weighted mean coking values of the petroleum-derived distillation residue and coal tar-derived distillation residue.

14. A pitch product according to any of the above claims comprising constituents of raw materials produced by the pyrolysis of petroleum streams, said raw materials including at least 30 wt.% asphaltenes, less than 10% saturates, and less than 40% resins, as described with (SARA).

15. A pitch product according to any of the above claims for use in manufacturing carbon-based formed articles.

16. A pitch binder comprising a pitch product according to any of the above claims, for use in manufacturing of graphite electrodes for electric arc furnaces and carbon anodes and Söderberg paste for aluminum production.

17. A graphite electrode comprising a pitch binder according to claim 16.

18. A carbon anode comprising a pitch binder according to claim 16.

19. A process for obtaining a pitch product comprising a petroleum-derived distillation residue and a coal tar-derived distillation residue, said process comprising a petroleum vacuum distillation process step for obtaining said petroleum-derived distillation residue.

20. A process according to claim 19, further comprising a coal tar vacuum distillation process step for obtaining a coal tar-derived distillation residue and blending the petroleum-derived distillation residue and the coal tar-derived distillation residue.

21. The process of claims 19 or 20, wherein the distillation process steps are performed at vacuum levels between 50 and 250 mbar and temperatures between 280 and 370 °C.

22. The process of claims 20 or 21, comprising blending the petroleum-derived distillation residue and coal tar-derived distillation residue in a mixing ratio between 20:80 and 70:30.

23. A process for manufacturing a graphite electrode or a carbon anode comprising the process according to any of claims 19 to 22.
